# DEMANDE DE BREVET EUROPEEN

(11) **EP 0 666 632 A1**
(43) Date de publication de la demande: **09.08.1995**
(21) Numéro de dépôt: 95400029.5
(22) Date de dépôt: 06.01.1995
(51) Int. Cl.: H02J 3/01

(54) **Filtre actif**

(30) Priorité: 04.02.1994 FR 9401261
(71) Demandeur: SCHLUMBERGER INDUSTRIES S.A., F-92120 Montrouge (FR)
(72) Inventeur: Tissier, Jean-François, F-86360 Chasseneuil du Poitou (FR); Gogce, Metin, F-86130 Saint Georges les Baillargeaux (FR); Huet, Jean-Philippe, F-86036 Poitiers (FR)
(74) Mandataire: Hawkes, David John

(57) **Abrégé**

Un filtre actif permettant de compenser les harmoniques polluants sur un réseau de distribution d'électricité et comprenant une source d'énergie (19, 20), un pont onduleur (21) relié entre la source d'énergie et le réseau, des moyens de contrôle (22) qui contrôlent le pont onduleur pour compenser les harmoniques polluants, caractérisé en ce que l'état de la source d'énergie (19, 20) est indépendant du contrôle du pont onduleur effectué par les moyens de contrôle (22) et en ce que les moyens de contrôle (22) contrôlent l'injection des composantes harmoniques indépendamment de l'état de la source d'énergie.

## Description

La présente invention est relative à un filtre actif permettant d'injecter des composantes harmoniques sur un réseau de distribution d'électricité.

Les solutions conventionnelles pour dépolluer un réseau d'alimentation électrique perturbé par des harmoniques de tension ou courant, tels qu'un filtre passif composé de condensateurs et d'inductances accordés sur la fréquence des perturbations, présentent des inconvénients dûs à leur caractère statique. Si le réseau se modifie, un filtre passif peut inopérer, nécessitant la modification ou le changement du filtre.

Ces inconvénients sont évités par l'utilisation des filtres actifs. Des filtres actifs sont connectés en parallèle ou en série sur le réseau (pour supprimer les courants harmoniques ou les tensions harmoniques, respectivement) et sont constitués d'un élément de stockage d'énergie (un condensateur ou une self, respectivement) relié à un pont onduleur, comprenant des interrupteurs à transistor, qui est connecté au réseau via un transformateur. Un automatisme de courant mesure les courants ou tensions sur le réseau et l'énergie stockée dans l'élément de stockage. Il contrôle l'élément de stockage et le pont onduleur pour compenser les effets des composantes harmoniques et pour reconstituer la forme de l'onde sinusoïdale de la composante fondamentale du réseau.

Le principe des filtres de ce type est l'échange d'énergie entre le réseau et l'élément de stockage d'énergie. C'est-à-dire, pour une onde déformée par des harmoniques, l'élément de stockage est contrôlé pour absorber l'énergie excédentaire de l'onde, vis-à-vis d'une onde sinuosoïdale, et pour en restituer afin de reconstituer la forme de l'onde sinusoïdale. Pour ce faire, l'automatisme de courant contrôle le pont onduleur et est basé sur la différence entre les courants ou tensions mesurées, des ondes de référence et sur la valeur de l'énergie stockée dans l'élément de stockage, pour maintenir la charge stockée dans l'élément de stockage à une valeur constante.

Un filtre actif de ce genre, ayant un automatisme qui supprime des harmoniques et maintient la charge stockée dans un condensateur à une valeur constante, est décrit dans l'article "Control Stategy of Active Power Filters Using Multiple Voltage-Source PWM converters", Hirofumi Akagi et al, IEEE Transactions on Industry Applications, Vol. IA-22, N° 3, May/June 1986. D'autres exemples de filtres actifs connus de ce type se trouvent dans les brevets US 4 835 411 et US 4 651 265.

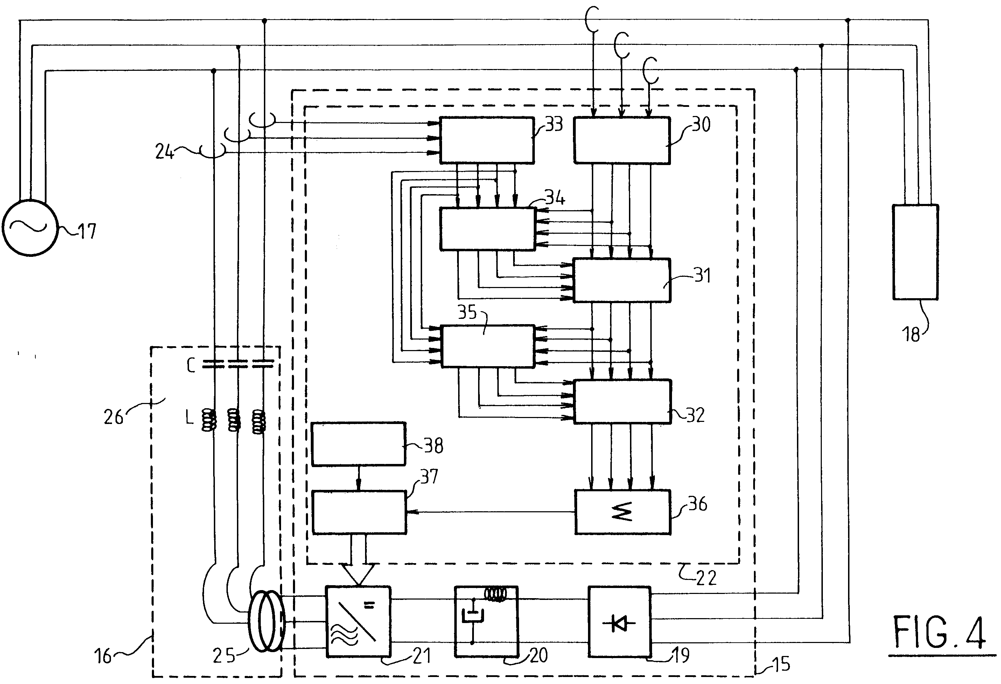

Le brevet PCT 94/05067 montre un autre exemple d'un filtre actif conventionnel et basé sur le principe de l'échange d'énergie entre le réseau et un élément de stockage. Le filtre comprend un amplificateur transconductance et un condensateur, la charge stockée dans le condensateur étant maintenue à une valeur constante par l'amplificateur afin d'absorber ou fournir de l'énergie au réseau pour compenser les harmonique polluants. Voir figure 4 et page 11, lignes 14 to 29.

Le brevet PCT WO 89/06879 décrit un autre filtre actif, dans lequel le système de contrôle pour compenser les harmoniques est basé sur une mesure de l'amplitude des harmoniques polluants existant sur le réseau en aval d'un point de connexion du filtre au réseau et une mesure de l'amplitude des harmoniques polluants restant sur le réseau en amont du point de connexion. La mesure des harmoniques polluants en amont de la connexion comprend seulement l'information sur l'amplitude des harmoniques et le système ne règle pas des décalages de phase qui peuvent se présenter.

L'article "Analysis and Design of a New Active Power Filter ..." dans IAS 93 : Conference Record of the 1993 IEEE Industry Applications Conference, Twenty Eighth IAS Annual Meeting, décrit un filtre actif d'un type apte à compenser les harmoniques sur le neutre et qui utilise des éléments de stockage d'énergie alimenté par le secondaire d'un transformateur relié aux phases du réseau. Les courants pris des phases et l'état des éléments de stockage dépendent des harmoniques appliqués au réseau. Ce système permet de compenser seulement des harmoniques homopolaires présents sur le neutre et ne compensent pas les harmoniques non-homopolaires présents sur les phases. En plus, ce système exige un redimensionnement des éléments du filtre pour gérer les grands courants induits dans le secondaire du transformateur.

Le brevet US 4 053 820 décrit un filtre actif ayant une source de courant continu, étant un pont redresseur relié au réseau, qui alimente un pont onduleur pour générer un harmonique de compensation. Le pont redresseur est contrôlé pour fournir un courant ayant la même amplitude que l'harmonique polluant et le pont onduleur est contrôlé pour générer un harmonique ayant la phase correcte. Le système est essentiellement mono-fréquence et exige un contrôle assez complexe de l'état de la source de courant.

D'autres exemples des filtres actifs sont décrit dans l'article "Dealing with Line Harmonics...", Instruments and Control Systems, vol. 66 n° 4, April 1994 (Radnor US) et l'article "A New Injection Method ...", IEEE Transactions on Industrial Electronics and Control Instrumentation, vol. 35, n° 1, Février 1988, NEW-YORK US, pages 141 - 147.

Les filtres actifs conventionnels présentent quelques problèmes. En particulier, ils utilisent un élément de stockage d'une grande taille qui doit être sans cesse rechargé. Puisqu'une partie de l'onde fondamentale est prise par l'élément de stockage, le pont onduleur doit être capable de passer l'onde fondamentale. Le dimensionnement et le choix des semi-conducteurs utilisés dans le pont sont sujet à quelques contraintes supplémentaires. Egalement, le maintien d'une valeur de charge constante dans l'élément de stockage nécessite un automatisme assez complexe ayant un algorithme de contrôle qui est une fonction de plusieurs valeurs mesurées, y compris la valeur de la charge dans l'élément de stockage. Une erreur dans le contrôle peut décharger ou surcharger l'élément de stockage avec des conséquences sérieuses au niveau de la compensation des harmoniques. Les dispositifs conventionnels doivent être construits avec des sauvegardes complexes par conséquent.

La présente invention a pour objet un filtre actif permettant de compenser les harmoniques polluants sur un réseau de distribution d'électricité et comprenant une source d'énergie, un pont onduleur relié entre la source et le réseau, des moyens de contrôle qui contrôlent le pont onduleur pour compenser les harmoniques polluants, caractérisé en ce que l'état de la source d'énergie est indépendant du contrôle du pont onduleur effectué par les moyens de contrôle et en ce que les moyens de contrôle contrôlent l'injection des composantes harmoniques par le pont onduleur sur le réseau indépendamment de l'état de la source d'énergie.

Ainsi, la présente invention évite les problèmes dûs à l'utilisation d'un élément de stockage important qui est chargé et déchargé via le pont onduleur. En particulier, elle fournit un système ayant un automatisme de contrôle beaucoup plus simplifié en comparaison des dispositifs conventionnels qui surveillent la charge stockée dans l'élément de stockage. Puisque la source d'énergie n'est pas chargée via le pont onduleur, le pont onduleur ne génère que des composantes harmoniques (plutôt qu'une partie de l'onde fondamentale ainsi que des harmoniques) et le dimensionnement et la tolérance des semi-conducteurs utilisés dans le pont peuvent être réduits. La présente invention évite également les dangers associés à un élément de stockage qui peut être déchargé ou surchargé, et la source d'énergie de la présente invention peut avoir une construction beaucoup plus simplifiée.

Selon un mode de réalisation, la source d'énergie est alimentée par le réseau de distribution d'électricité. Par exemple, la source d'énergie peut comprendre un pont redresseur relié au réseau pour fournir une tension continue qui est modulée par le pont onduleur pour créer des composantes harmoniques. Dans d'autres réalisations, la source d'énergie peut être complètement indépendante du réseau. Dans chaque cas, l'alimentation de la source via un pont onduleur qui contrôle l'injection des composantes harmoniques est évitée.

De préférence, le filtre actif comprend également un circuit de couplage relié entre le pont onduleur et le réseau de distribution d'électricité, le circuit de couplage comprenant un ou plusieurs circuits résonnants aptes à minimiser les pertes de puissance lors de l'injection des composantes harmoniques et à bloquer la transmission de l'onde fondamentale du réseau aux éléments du filtre, la fréquence d'accord des circuits résonnants étant fonction des fréquences et des amplitudes des composantes harmoniques à injecter. Puisque la source de l'énergie n'est pas alimentée via le pont onduleur et que le filtre actif ne passe que des harmoniques, un filtrage de l'onde fondamentale du réseau peut être effectué pour assurer que le pont onduleur n'est pas surchargé par l'onde fondamentale du réseau de distribution.

La fréquence d'accord exacte du circuit résonnant dépend de l'importance relative des harmoniques à injecter, qui peut être déterminée avant d'installer le filtre. Par exemple s'il faut injecter autant d'harmoniques 3 et 5 la fréquence d'accord voisine de la fréquence centrale, c'est-à-dire, une valeur intermédiaire entre les fréquences des harmoniques 3 et 5. Ou, s'il faut injecter plus d'harmoniques 3 que d'harmoniques 5, la fréquence d'accord du circuit résonnant approchera la fréquence d'harmonique 3 plutôt que la fréquence d'harmonique 5.

De préférence, les moyens de contrôle du filtre comprennent un circuit de synchronisation qui synchronise le contrôle du pont onduleur avec la fréquence du réseau. Cette synchronisation assure que tout problème de battements entre les harmoniques injectés et les harmoniques polluants sur le réseau est évité.

Selon un mode de réalisation, les moyens de contrôle comprennent un circuit de filtrage relié au réseau de distribution, permettant d'isoler chacun des harmoniques polluants présents sur le réseau, et un circuit de traitement relié au circuit de filtrage, qui produit une série de composantes harmoniques en opposition de phase pour injecter sur le réseau afin de supprimer les harmoniques polluants. Selon un mode de réalisation, les moyens de contrôle comprennent un circuit de sommation qui somme les composantes harmoniques pour produire un seul signal qui contrôle le pont onduleur pour injecter les composantes harmoniques.

De préférence, les moyens de contrôle comprennent un circuit de correction qui mesure et isole chaque harmonique injecté par le circuit de couplage, et qui corrige le circuit de traitement pour compenser les différences de phase restant entre les harmoniques injectés et les harmoniques polluants sur le réseau. Le circuit de correction peut corriger aussi le circuit de traitement pour compenser les différences d'amplitude entre les harmoniques injectés et les harmoniques polluants sur le réseau.

Selon un autre mode de réalisation le circuit de correction peut mesurer les harmoniques polluants restant sur le réseau en amont de l'injection pour régler l'amplitude des harmoniques injectés. Cependant, ce mode de réalisation ne permet pas de compenser les différences de phases dans le système et, par conséquent, est moins fiable que l'autre mode de réalisation.

La présente invention s'applique également à l'injection des harmoniques à un réseau polyphasé aussi bien qu'à un réseau monophasé. Pour un filtre actif apte à être relié à un réseau triphasé, le circuit de couplage peut comprendre deux circuits résonnants pour injecter des harmoniques sur deux phases avec une connexion entre les phases pour équilibrer l'injection des harmoniques entre les trois phases.

Selon un mode de réalisation pour des réseaux polyphasés, le filtre actif est apte à injecter certains harmoniques parmi la série de composantes harmoniques sur certaines phases du réseau. Pour un réseau triphasé ayant un neutre, par exemple, le filtre actif peut être apte à injecter des composantes harmoniques sélectionnées sur le neutre pour compenser les harmoniques polluants qui sont homopolaires sur les phases du réseau. Dans ce cas, les moyens de contrôle peuvent surveiller les harmoniques polluants soit via un capteur dédié au neutre, soit via des capteurs reliés aux trois phases. Les harmoniques non-homopolaires peuvent être compensés individuellement sur chaque phase, comme avant.

Selon un mode de réalisation, le filtre actif injecte des composantes de courant sur le réseau. Dans un autre mode de réalisation, le filtre actif injecte des composantes de tension sur le réseau.

L'invention sera mieux comprise à la lecture de la description qui suit de plusieurs mode de réalisation de l'invention, donnée à titre d'exemples illustratifs et non-limitatifs et faisant référence aux dessins annexés sur lesquels :
La Figure 1 montre un exemple d'un filtre actif selon l'art antérieur;
La Figure 2 représente l'échange d'énergie qui est effectué par le filtre de la figure 1 pour compenser des déformations de l'onde sinusoïdale du réseau;
La Figure 3 montre un exemple d'un filtre actif selon un premier mode de réalisation;
La Figure 4 montre le filtre de la Figure 3 d'une manière plus detaillée;
La Figure 5 montre un exemple d'un filtre actif selon un autre mode de réalisation apte à être utilisé avec un réseau triphasé;
La Figure 6 montre un exemple d'un filtre actif selon un autre mode de réalisation apte à être utilisé avec un réseau triphasé ayant un neutre;
La Figure 7 montre un exemple d'un filtre actif selon l'invention apte à se connecter en série dans le réseau pour compenser les harmoniques de tension;

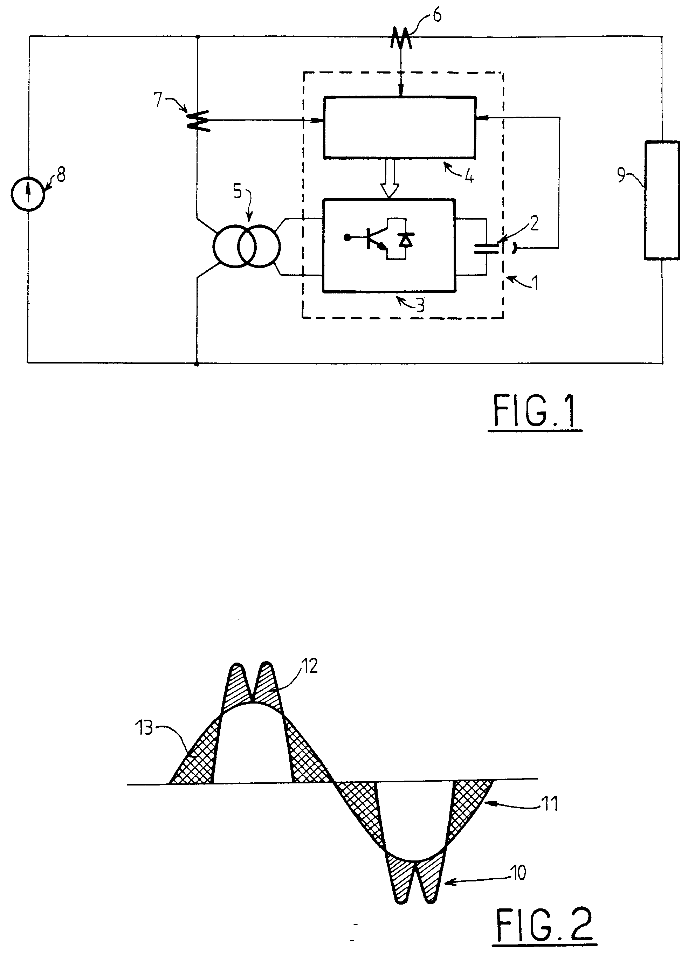

Comme le montre la Figure 1, un filtre actif 1 selon l'art antérieur comprend un élément de stockage d'énergie 2, dans ce cas un condensateur, relié à des interrupteurs à transistor constituant un pont onduleur monophasé 3, contrôlé par un automatisme de courant 4 et connecté à l'enroulement secondaire d'un transformatmeur 5. L'automatisme de contrôle 4 mesure des courants s'écoulant dans le réseau et dans l'enroulement primaire du transformateur 5 via des capteurs de courant 6,7. L'automatisme utilise une commande du type modulation de largeur d'impulsions (MLI) pour contrôler le pont onduleur dépendant de ces mesures et la charge stockée dans le condensateur. Le filtre actif est relié en parallèle dans le réseau entre la source de puissance alternative 8 et une charge polluante 9 pour compenser des perturbations de courant dûes à la charge polluante.

Comme montré à la Figure 2, le principe des filtres actifs conventionnels est l'échange d'énergie entre le réseau et l'élément de stockage d'énergie, l'automatisme contrôlant le pont onduleur pour effectuer ces échanges. La figure 2 montre la comparaison entre l'onde du réseau 10 perturbée par des harmoniques et l'onde fondamentale 11 de la source de puissance. L'automatisme contrôle le pont onduleur pour que l'élément de stockage absorbe l'énergie pendant la période 12 et la restitue pendant la période 13 pour reconstituer l'onde sinusoïdale.

Comme discuté dans l'introduction, pour ce faire, l'automatisme utilise un algorithme assez compliqué, qui contrôle le pont onduleur, dépendant des valeurs de courant mesurées dans le réseau en comparaison avec une onde de référence et de la valeur de charge stockée dans l'élément de stockage. L'automatisme essaye de maintenir toujours la charge stockée dans l'élément de stockage à une valeur constante. Les filtres actifs de ce type présentent quelques problèmes liés à la complexité de l'algorithme de contrôle et l'utilisation d'un élément de stockage qui doit être chargé et rechargé et maintenu à une valeur de charge constante.

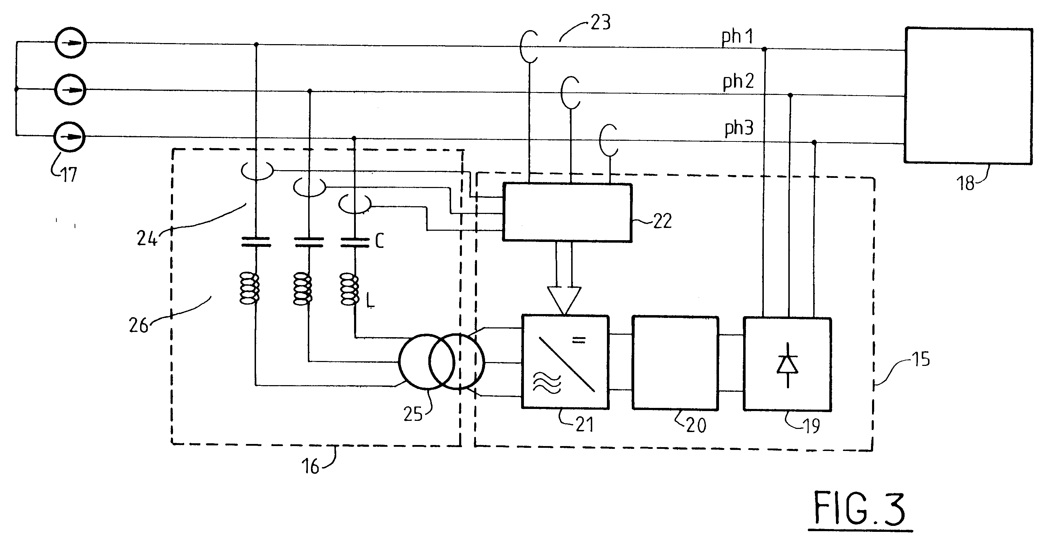

La Figure 3 montre un filtre actif selon un mode de réalisation de l'invention, comprenant un générateur d'harmoniques 15, qui débite dans un circuit de couplage 16 comprenant un transformateur triphasé 25, et permettant de se connecter en parallèle sur le réseau de distribution entre la source de puissance alternative 17 et la ou les charges 18. Le générateur d'harmoniques est constitué d'une source d'énergie comprenant un pont redresseur 19 alternatif-continu, suivi d'un circuit de filtrage 20 constitué d'une self et d'un condensateur qui supprime des ondulations dans le signal à la sortie du pont redresseur et assure la régulation d'une tension continue permanente. Cette tension est ensuite découpée par un pont onduleur 21 constitué d'interrupteurs à transistor et contrôlé par un signal de contrôle du type MLI (modulation de largeur d'impulsions) fournit par des moyens de contrôle 22. Les moyens de contrôle peuvent être réalisés par un microprocesseur et acquièrent des mesures de courant sur les phases du réseau et sur les phases du circuit de couplage via les capteurs de courant 23, 24. Ils contrôlent le pont onduleur pour générer des composantes harmoniques synchronisées avec des harmoniques perturbantes qui se trouvent sur le réseau, mais en opposition de phase pour les réduire.

La tension fournie par le pont redresseur 19 et le filtre 20 est toujours constante et l'état de cette source d'énergie est indépendant du contrôle du pont onduleur effectué par les moyens de contrôle pour générer les harmoniques injectés sur le réseau. Egalement, les moyens de contrôle surveillent seulement les courants mesurés dans le réseau et dans le circuit de couplage pour évaluer le signal de contrôle envoyé au pont onduleur. Ainsi, les problèmes reliés à l'utilisation d'un élément de stockage d'énergie qui doit être maintenu avec une charge constante sont évités. Puisque la source d'énegie est alimentée indépendamment du pont onduleur, le pont onduleur ne passe que des composantes harmoniques. Pour minimiser les pertes de puissance lors de l'injection des composantes harmoniques et pour bloquer la transmission de l'onde fondamentale au pont onduleur, le circuit de couplage 16 comprend également des circuits résonnants 26 constitués d'une self et d'un condensateur en série, les valeurs de ces composantes étant choisies selon les fréquences et les amplitudes de l'onde fondamentale et des harmoniques injectés par le filtre. Puisqu'il n'y a aucune transmission de l'onde fondamentale par le pont onduleur, le dimensionnement des composants semi-conducteurs utilisés dans ce pont peut être réduit.

La Figure 4 montre en détail la structure des moyens de contrôle de la Figure 3. Les moyens de contrôle comprennent un circuit de filtrage 30 relié aux capteurs de courant 23 qui élimine la composante fondamentale du courant et distingue chacun des harmoniques sur le réseau pour produire une série de signaux, chaque signal représentant une composante harmonique isolée. Chaque phase est analysée indépendamment. Ces signaux passent alors à un circuit de traitement, comprenant un déphaseur 31 et un correcteur d'amplitude 32. Le déphaseur 31 déphase les signaux fournis par le circuit de filtrage pour produire une série de signaux en opposition de phase aux harmoniques sur le réseau. Les moyens de contrôle comprennent également un circuit de correction comprenant un circuit de filtrage 33, relié aux capteurs de courant 24, et un comparateur de phase 34 et un comparateur d'amplitude 35. Le circuit de filtrage 33 fournit des signaux représentant chacun des composantes harmoniques injectées par le circuit de couplage et qui sont comparées par le comparateur de phase 34 avec les signaux du circuit de filtrage 30 pour connaître les déphasages existant entre les composantes injectées et ceux créés par la charge polluante Les résultats de ces comparaisons sont appliqués au circuit déphaseur pour assurer l'opposition de phase des signaux. Puis, une comparaison en amplitude est effectuée entre les composantes injectées et les composantes à la sortie du déphaseur 31 par le comparateur d'amplitude 35. Les résultats de ces comparaisons sont appliqués au correcteur d'amplitude 32 pour corriger l'amplitude des signaux.

Les signaux présents à la sortie du correcteur d'amplitude passent alors à un sommateur 36 qui les somme pour obtenir un seul signal qui contrôle un circuit à modulation de largeur d'impulsion 37. Pour s'assurer que le signal de commande envoyé au pont onduleur est synchronisé avec la fréquence du réseau, un circuit de synchronisation secteur 38 est fourni, celui-ci est relié au réseau et synchronise le fonctionnement du circuit à modulation de largeur d'impulsions avec des changements dans la fondamentale du réseau.

Dans le filtre des Figures 3 et 4, chaque phase est traitée indépendamment. L'injection des composantes harmoniques peut être effectuée par un transformateur triphasé, le signal pour chaque phase étant connecté à une borne du transformateur, ou par trois transformateurs monophasés.

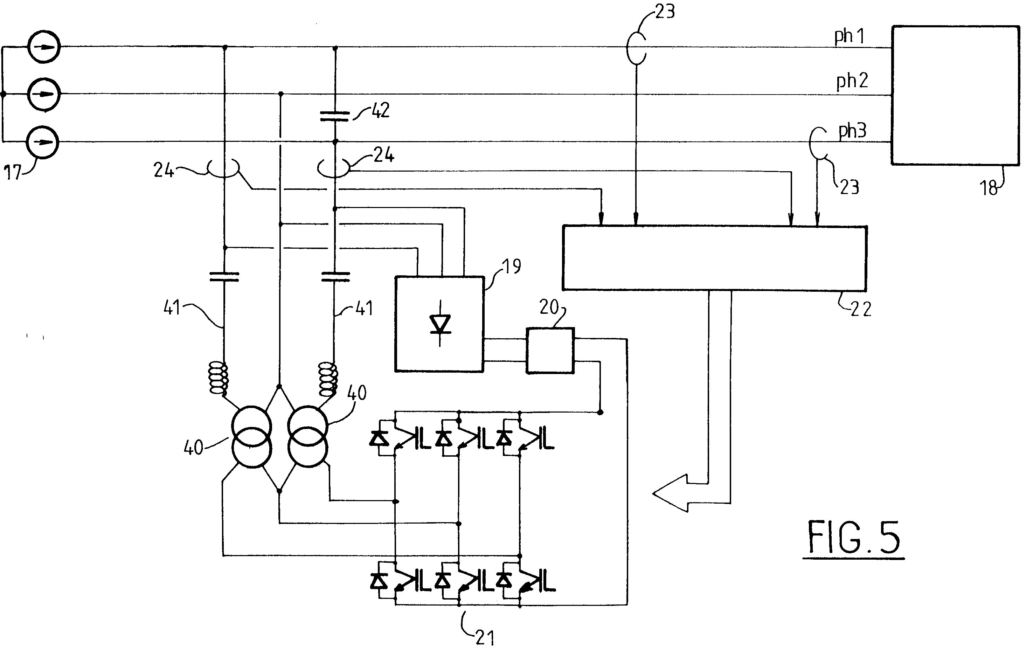

La Figure 5 montre un autre mode de réalisation de l'invention apte à être utilisé avec un réseau triphasé. Les éléments ayant la même fonction sont désignés par les mêmes chiffres de références. Dans cette figure, les interrupteurs à transistor du pont onduleur 21 sont montrés.

Dans ce cas, et grâce à la nature d'un réseau triphasé, le filtre actif reçoit des signaux et injecte des composantes sur deux phases seulement, les phases ph1 et ph3. Le circuit de couplage dans ce mode de réalisation comprend deux transformateurs monophasés 40, connectés comme montré, avec deux circuits résonnants 41, comprenant une self et un condensateur en série comme avant. A cause de l'introduction des condensateurs entre les phases ph1 et ph2 et entre les phases ph2 et ph3 il faut connecter également un troisième condensateur 42 entre les phases ph1 et ph3 pour ne pas déséquilibrer le reste de l'installation.

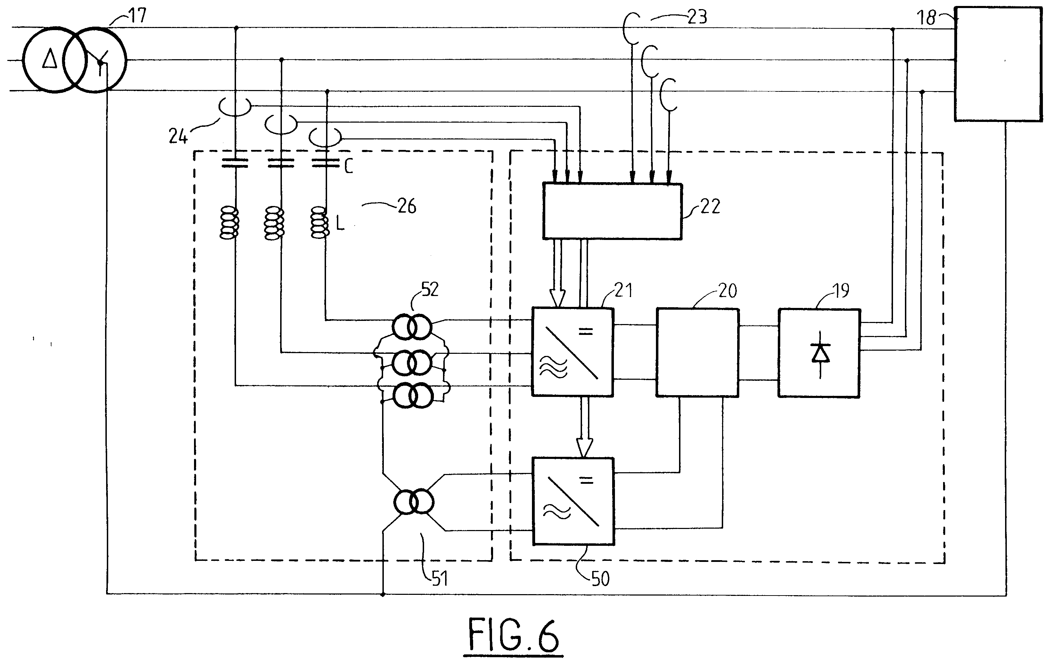

Un autre mode de réalisation pour l'utilisation avec un réseau ayant un neutre est montré dans la Figure 6. Il existe des harmoniques polluants qui sont identiques sur les trois phases. Par exemple tous les harmoniques de rang multiple de trois sur chacune des phases d'un réseau triphasé peuvent être en phases. Dans ce cas, ces harmoniques peuvent être éliminés par l'injection des composantes corrigées dans le neutre. Pour ce faire, le mode de réalisation de la Figure 6 comprend, en plus, un pont onduleur monophasé 50, relié à la source d'énergie et contrôlé par les moyens de contrôle pour injecter des composantes harmoniques sur le neutre via un transformateur monophasé 51. Les autres harmoniques polluants sur le réseau qui ne sont pas homopolaires sont corrigés par l'injection des composantes individuelles sur chaque phase comme avant et via trois transformateurs 52.

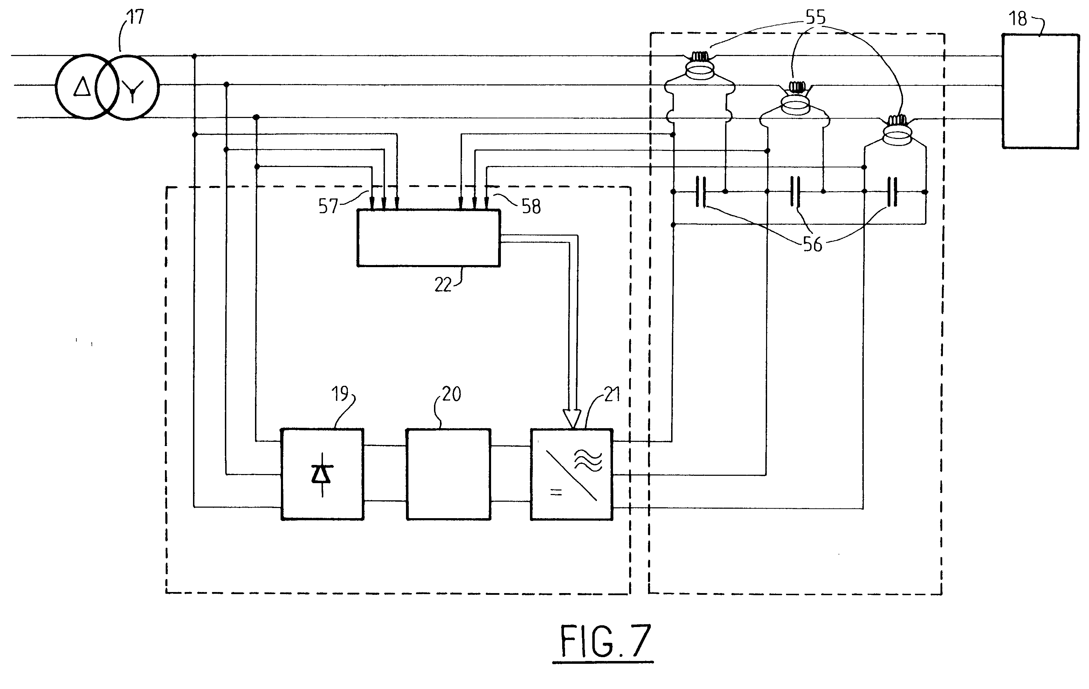

Un autre mode de réalisation qui mesure et compense les harmoniques de tension sur le réseau est montré dans la Figure 7. Dans ce mode de réalisation, les moyens de contrôle contrôlent le pont onduleur 21 pour injecter des tensions sur la ligne via un circuit de couplage comprenant des transformateurs à entrefer 55 et des condensateurs 56 pour bloquer le courant fondamental et qui sont montés en triangle entre le pont onduleur et les transformateurs. Les moyens de contrôle mesurent directement les tensions sur les phases via les entrées 57 et les tensions injectées via les entrées 58. Comme avant, les moyens de contrôle font une comparaison entre les harmoniques injectés et les harmoniques sur le réseau pour minimiser les perturbations introduites par la charge.

D'autres modes de réalisation ayant d'autres méthodes de contrôle sont possibles. Par exemple, dans le cas où le filtre est utilisé avec un compensateur d'énergie réactive comprenant un banc de condensateurs monté en parallèle avec la charge, les courants circulant dans le compensateur peuvent être mesurés pour donner une mesure des harmoniques polluants sur le réseau et pour contrôler l'injection des harmoniques. En particulier, la mesure des courants harmoniques sur le réseau de distribution peut se faire de part et d'autre du banc de compensation et du point de connexion dit transformateur du réseau (source d'énergie) afin de les sommer et de pouvoir traiter le signal du résultant. Le point d'injection du filtre actif est situé entre les deux points de mesure. Dans certaines réalisations, les capteurs utilisés pour mesurer les courants ou tensions injectés peuvent être omis, les moyens de contrôle étant apte à contrôler l'injection des hal moniques seulement en réponse à une mesure des harmoniques présents sur le réseau. Egalement, une mesure des tensions harmoniques sur le réseau peut être utilisée dans le contrôle de l'injection des courants harmoniques, ou vice versa, selon les détails des moyens de contrôle.

## Revendications

1. Filtre actif permettant de compenser les harmoniques polluants sur un réseau de distribution d'électricité et comprenant une source d'énergie (19, 20), un pont onduleur (21) relié entre la source et le réseau, des moyens de contrôle (22) qui contrôlent le pont onduleur pour compenser les harmoniques polluants, caractérisé en ce que l'état de la source d'énergie (19, 20) est indépendant du contrôle du pont onduleur effectué par les moyens de contrôle (22) et en ce que les moyens de contrôle contrôlent l'injection des composantes harmoniques par le pont onduleur sur le réseau indépendamment de l'état de la source d'énergie.

2. Filtre actif selon la revendication 1 comprenant également un circuit de couplage (16) relié entre le pont onduleur et le réseau de distribution d'électricité, le circuit de couplage comprenant un ou plusieurs circuits résonnants (26) aptes à minimiser les pertes de puissance lors de l'injection des composantes harmoniques et à bloquer la transmission de l'onde fondamentale du réseau aux éléments du filtre, la fréquence d'accord des circuits résonants étant fonction des fréquences et des amplitudes des composantes harmoniques à injecter.

3. Filtre actif selon la revendication 1 ou 2 où les moyens de contrôle du filtre comprennent un circuit de synchronisation (37, 38) qui synchronise le contrôle du pont onduleur avec la fréquence du réseau.

4. Filtre actif selon l'une quelonque des revendications 1 à 3 où les moyens de contrôle comprennent un circuit de filtrage (30) relié au réseau de distribution, permettant d'isoler chacun des harmoniques polluants présents sur le réseau, et un circuit de traitement (31, 32) relié au circuit de filtrage, qui produit une série de composantes harmoniques en opposition de phase pour injecter sur le réseau afin de supprimer les harmoniques polluants.

5. Filtre actif selon la revendication 4 où les moyens de contrôle comprennent un circuit de sommation (36) qui somme les composantes harmoniques pour produire un seul signal qui contrôle le pont onduleur pour injecter les harmoniques.

6. Filtre actif selon la revendication 4 ou 5 où les moyens de contrôle comprennent un circuit de correction (33, 34, 35) qui mesure et isole chaque harmonique injecté par le circuit de couplage, et qui corrige le circuit de traitement pour compenser les différences de phase restant entre les harmoniques injectés et les harmoniques polluants sur le réseau.

7. Filtre actif selon la revendication 6 où le circuit de correction (33, 34, 35) corrige aussi le circuit de traitement pour compenser les différences d'amplitude entre les harmoniques injectés et les harmoniques polluants sur le réseau.

8. Filtre actif selon l'une quelconque des revendications 1 à 7, apte à être relié à un réseau polyphasé.

9. Filtre actif selon la revendication 2 apte à être relié à un réseau triphasé, le circuit de couplage ne comprenant alors que deux circuits résonnants (41).

10. Filtre actif selon l'une quelconque des revendications 1 à 9, apte à être relié sur un réseau ayant un neutre et à injecter des composantes harmoniques sur le neutre pour compenser les harmoniques polluants qui sont homopolaires sur les phases du réseau.

11. Filtre actif selon la revendication 10 apte à injecter des composantes harmoniques sur chaque phase du réseau ainsi que des composantes harmoniques homopolaires sur le neutre, pour compenser les harmoniques homopolaires et non-homopolaires existant sur le réseau.

12. Filtre actif selon l'une quelconque des revendications 1 à 11 apte à injecter des composantes de courant sur le réseau.

13. Filtre actif selon l'une quelconque des revendications 1 à 11 apte à injecter des composantes de tension sur le réseau.
